(19) Europäisches Patentamt

European Patent Office

Office européen des brevets

(11) **EP 0 897 640 B1**

(12) **FASCICULE DE BREVET EUROPEEN**

(45) Date de publication et mention
de la délivrance du brevet:
**02.01.2003 Bulletin 2003/01**

(21) Numéro de dépôt: **97923154.5**

(22) Date de dépôt: **07.05.1997**

(51) Int Cl.[7]: **H04N 7/26**

(86) Numéro de dépôt international:
**PCT/FR97/00820**

(87) Numéro de publication internationale:
**WO 97/043859 (20.11.1997 Gazette 1997/50)**

(54) **ENCODEUR A DEBIT VARIABLE**

KODIERER MIT VERÄNDERLICHER BITRATE

VARIABLE BIT-RATE ENCODER

(84) Etats contractants désignés:
**DE FR GB IT**

(30) Priorité: **09.05.1996 FR 9605766**

(43) Date de publication de la demande:
**24.02.1999 Bulletin 1999/08**

(73) Titulaire: **THOMSON multimedia
92648 Boulogne Cédex (FR)**

(72) Inventeurs:
• **ALEXANDRE, Patrice**
**F-92648 Boulogne Cedex (FR)**
• **NOBLET, Ludovic**
**F-92648 Boulogne Cedex (FR)**
• **PERRON, Claude**
**F-92648 Boulogne Cedex (FR)**

(74) Mandataire: **Ruellan-Lemonnier, Brigitte et al
THOMSON multimedia,
46 quai A. Le Gallo
92648 Boulogne Cédex (FR)**

(56) Documents cités:
EP-A- 0 478 230       EP-A- 0 515 101
EP-A- 0 540 961       EP-A- 0 595 268
EP-A- 0 670 663       EP-A- 0 689 360
EP-A- 0 708 566       WO-A-95/26111
WO-A-96/20575

• IEEE TRANSACTIONS ON CIRCUITS AND
SYSTEMS FOR VIDEO TECHNOLOGY, vol. 2, no.
4, 1 Décembre 1992, pages 361-372,
XP000323661 REIBMAN A R ET AL:
"CONSTRAINTS ON VARIABLE BIT-RATE
VIDEO FOR ATM NETWORKS"
• DISCOVERING A NEW WORLD OF
COMMUNICATIONS, CHICAGO, JUNE 14 - 18,
1992, vol. 1 OF 4, 14 Juin 1992, INSTITUTE OF
ELECTRICAL AND ELECTRONICS ENGINEERS,
pages 544-550, XP000326921 LAU R C ET AL:
"RECEIVER BUFFER CONTROL FOR VARIABLE
BIT-RATE REAL-TIME VIDEO"

## Description

L'invention concerne le codage de données numériques audio, vidéo ou auxiliaires.

Elle concerne plus particulièrement les systèmes de transmission à débit variable et de stockage exploitant une compression de données numériques audio et vidéo. Elle est compatible de la norme MPEG 2.

Le rôle des systèmes de compression vidéo est d'obtenir la meilleure qualité d'image pour un débit de transmission le plus faible possible. Cette qualité de codage est liée entre autre au choix de l'estimateur de mouvement et de l'algorithme de régulation du codeur. Elle dépend directement des critères d'optimalité retenus.

Pour l'estimation de mouvement, la capacité de recherche dans l'image de référence est une caractéristique importante. Pour la régulation, l'objectif majeur est de maintenir une qualité stable des images codées. Le taux de "bourrage" effectué pour ajuster le codage au débit de sortie (en général une insertion de "0" dans le flot de données permettant de conserver le débit de consigne) doit être minimisé pour un codage optimal.

Le coût de codage de chaque image est variable. C'est le rôle de la boucle de régulation de corriger les variations de flux dues aux variations de la complexité de l'image (définie plus loin) et transmettre en sortie un flux de données correspondant à un débit de consigne. Cette régulation agit généralement sur le pas de quantification fonction du niveau de remplissage de la mémoire tampon (buffer en anglais). Cette mémoire tampon en sortie du codeur permet d'absorber les écarts de débit dus au temps de réponse de la boucle de régulation, auquel est liée la capacité du buffer.

Le flux de données en sortie d'un codeur d'une source vidéo peut être variable. Il peut en effet être intéressant, par exemple dans le cas d'une transmission de plusieurs sources vidéo sur un seul canal, de répartir le débit "global" disponible de ce canal entre les différentes sources d'une manière dynamique, c'est à dire en fonction de l'évolution de la complexité des images à coder de chaque source vidéo. Ce procédé permet d'améliorer la qualité globale des images transmises, par rapport à ceux existants, par exemple ceux affectant un débit aux sources vidéo en fonction du type de programme transmis.

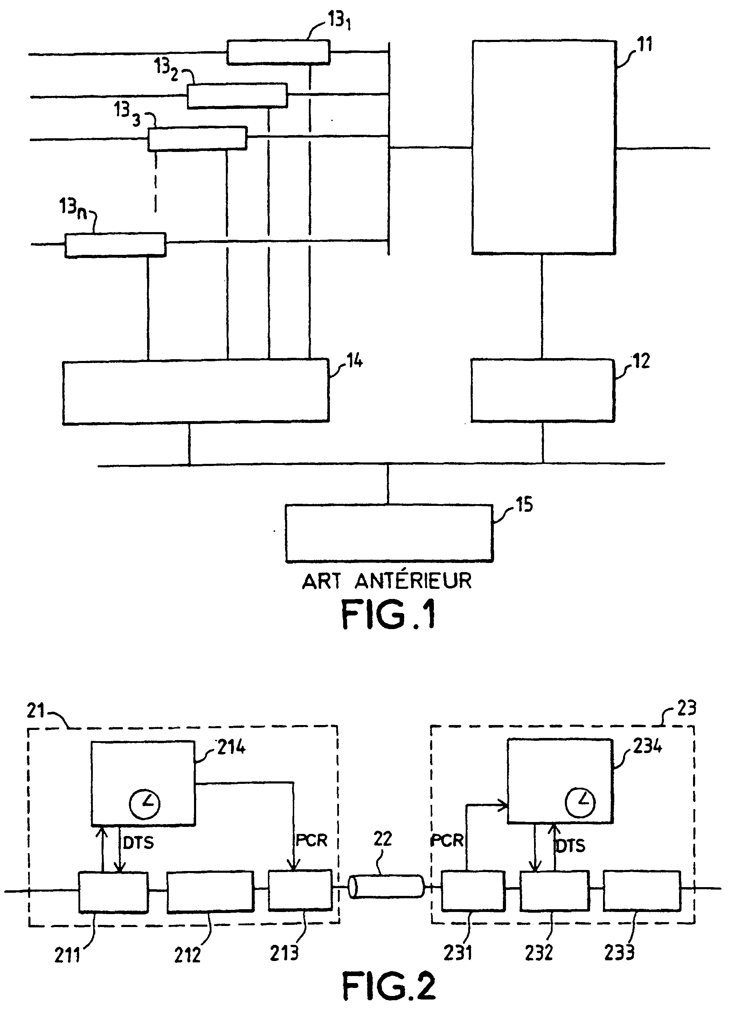

La figure 1 représente un ensemble d'une transmission utilisant un tel procédé. Il s'agit de transmission de plusieurs sources vidéo codées sur un seul canal de transmission à débit global constant. Ce débit correspond à sa capacité, par exemple celle du canal d'un transpondeur. Les circuits de codage des sources vidéo 13i sont reliés à l'entrée d'un multiplexeur 11 dont la sortie fournit le flot de données à transmettre sur le canal. Ils sont également reliés à un circuit d'interface 14 qui transmet les données relatives à la complexité des sources vidéo vers un allocateur de débit 12 et reçoit les débits attribués à chaque source par cet allocateur de débit 12. Celui-ci, qui a donc pour rôle d'allouer un débit à chaque source 13i, commande le circuit de multiplexage ou multiplexeur 11. Les informations sont échangées par l'intermédiaire d'un bus rapide auquel est abonné l'allocateur de débit 12 et le circuit d'interface 14. Un circuit de supervision 15 est relié à ce bus pour assurer la gestion de l'ensemble de transmission.

Le multiplexage est effectué par exemple à une cadence GOP, le GOP étant un groupe d'images défini plus loin, en fonction du débit alloué par l'allocateur de débit à chaque source vidéo transmise sur le même canal. Ce débit est fonction d'un coefficient de complexité de la source vidéo prenant en compte le volume d'informations générées pour un pas de quantification donné. Ce coefficient est mesuré pour chaque GOP de chaque source vidéo. Il correspond par exemple au nombre de bits utilisés pour coder un GOP, le pas de quantification étant constant ou bien à un comptage normalisé de bits correspondant au nombre de bits multiplié par le pas de quantification si ce pas est variable. Le flux étant constant sur la durée d'un GOP, le buffer de sortie de la source correspondante doit absorber les pointes de débit pendant la durée d'un GOP.

L'exploitation d'encodeurs à débit variable associés à un multiplexage statistique fonction du débit de chaque source tel que décrit ci-dessus est connue et est un moyen d'optimiser la capacité du canal du transpondeur. Les inconvénients de ces procédés de régulation sont également connus. Il s'agit principalement des tailles des mémoires tampon au niveau des décodeurs qui doivent être importantes pour être capables d'absorber les variations de débit des sources vidéo correspondantes sans qu'il y ait assèchement ou saturation de la mémoire. Le buffer du décodeur ne doit ni déborder (perte de données) ni s'assécher. Le coût du décodeur s'en trouve augmenté. D'autre part, la capacité mémoire nécessaire n'est généralement plus compatible de la norme MPEG2.

La variation de débit instantanée, c'est à dire au niveau de l'image, exige généralement des capacités de mémoires tampon encore plus importantes, que ce soit au niveau du codeur ou du décodeur ou bien doit être limitée en fonction de ces capacités mémoire.

Les procédés de régulation sont généralement basés sur la gestion d'un buffer virtuel. Ainsi, la demande internationale WO95/26111 définit une taille du buffer virtuel fonction d'un débit prévu en sortie du codeur. La demande européenne EP 670 663 définit un positionnement de ce buffer virtuel dans le buffer physique. Ces choix ne suffisent cependant pas à optimiser la plage de variation de débit de sortie pour une taille donnée du buffer physique.

Le but de la présente invention est de remédier aux inconvénients précités.

Elle a pour objet un procédé de codage de données numériques d'une séquence d'images vidéo réalisant une compression imagé de ces données et une régulation du débit en sortie du codeur par l'intermédiaire d'une boucle de régulation agissant sur un pas de quantification des données à coder, une mémorisation dans un buffer tampon des données en sortie du codeur pour leur transmission sur un canal selon un débit variable vers un buffer d'un décodeur, un étiquetage de ces données pour garantir un temps τ constant entre l'instant de mémorisation d'une image dans le buffer du codeur et l'instant de sortie de cette image du buffer du décodeur, la régulation de débit pour l'image à l'instant n étant effectuée en fonction d'une prévision de débit pour le canal de transmission pour l'instant n+ τ, de manière que le remplissage du buffer du codeur est tel qu'il évolue au cours du temps, entre deux limites définissant un buffer virtuel, la limite haute ou offset du buffer virtuel calculée pour le codage de l'image à l'instant n étant proportionnelle, au moins sur une plage de variation du débit, au débit de transmission pour le canal prévu à l'instant n+ τ, caractérisé en ce que, la taille du buffer virtuel à l'instant n, définie par ces deux limites, est proportionnelle, au moins sur une plage de variation du débit, au débit de transmission pour le canal prévu à l'instant n+ τ.

Elle a également pour objet un procédé de transmission de données de plusieurs sources vidéo réalisant pour chaque source un codage de ces données pour les transmettre selon un débit variable sur un même canal de transmission, caractérisé en ce qu'il réalise, pour chaque source, une prévision de débit τ instant avant le débit effectif de cette source sur le canal, en fonction du débit disponible canal et de mesures de complexité des images précédentes de l'ensemble des sources vidéo.

Les caractéristiques et avantages de la présente invention ressortiront mieux de la description suivante, donnée à titre d'exemple et en référence aux figures annexées où :

- la figure 1 représente un ensemble de transmissions connu de l'art antérieur ;
- la figure 2 représente un dispositif de codage et de décodage selon la norme MPEG2 ;
- la figure 3 représente, d'une manière schématique, le remplissage des mémoires tampon au codeur et décodeur en fonction des débits ;
- la figure 4 représente un exemple d'évolution de la taille et la position du buffer virtuel en fonction du temps ;
- la figure 5 représente la taille et la position du buffer virtuel dans la buffer physique du codeur en fonction du débit ;
- la figure 6 représente la taille du buffer virtuel dans la buffer physique du codeur en fonction du débit ;
- la figure 7 représente l'évolution du paramètre α en fonction du débit ;
- la figure 8 représente un dispositif de codage selon l'invention ;
- la figure 9 représente un dispositif de régulation selon l'invention ;
- la figure 10 représente un organigramme du procédé de régulation selon l'invention.

Les avantages de la présente invention concernent la taille de la mémoire tampon du décodeur qui est réduite. Celle-ci reste ainsi compatible de la norme MPEG2 tout en permettant des variations instantanées du débit dans une plage très importante. Le procédé a capacité à réagir à chaque image, à un changement du débit, tout en garantissant le respect des contraintes de taille du buffer vidéo au décodeur. Cette capacité est d'autant plus remarquable qu'elle n'introduit pas de limitation quant au pas maximal de changement de débit, ceci dans la fourchette 1,5 - 15 Mbit/s du format MP@ML MPEG2 (MPEG2 Main Profile Main Level).

Grâce à l'invention, le débit disponible du canal est optimisé, c'est à dire distribué d'une manière optimisée en termes de temps et de valeur en fonction de la complexité de l'information de chaque source vidéo.

Le principe de compression vidéo communément appelé MPEG2 fait l'objet d'une recommandation internationale (ISO/IEC 13818 H.262). L'architecture fonctionnelle d'un compresseur MPEG2 est connue pour être décrite dans cette norme MPEG2 et est brièvement rappelée ci-dessous.

L'entrée vidéo du codeur reçoit des images codées numériquement au format 4.2.2. Dans le cas d'un codage spatial (codage intra-image ou "infra"), les images ou plus exactement les blocs constituant une image subissent directement une transformation DCT suivie d'une quantification (images I), les valeurs quantifiées étant ensuite codées en longueur variable (CLV) avant d'être mémorisées dans une mémoire ou buffer tampon. Ce dernier assure le "lissage" du débit en sortie du codeur et une boucle de régulation permet d'asservir le pas de quantification sur le débit de consigne. Une quantification inverse suivie d'une transformation DCT inverse sont également effectuées de façon à stocker en mémoire l'image reconstruite qui servira de support à l'estimation de mouvement.

Le codage inter-image ou "inter" exploite les redondances temporelles en codant un déplacement des blocs entre les images. Deux types de codage temporel existent :

- le codage prédictif qui s'appuie uniquement sur les images de même type ou de type intra qui les précèdent (forward) lors de l'estimation de mouvement (images P) ;
- le codage bidirectionnel qui s'appuie sur les images I et/ou P qui encadrent directement l'image à coder (images B).

La transformation en cosinus ne s'applique que sur la différence entre images dans le cas d'un codage temporel. L'erreur ainsi quantifiée, accompagnée des vecteurs qui caractérisent les mouvements des blocs constituant une image permet une reconstruction au décodeur.

On appelle GOP (Group Of Pictures) un ensemble composé d'une image I suivie par les images P et B qui précèdent la prochaine image I.

La description du principe de régulation de débit, objet de l'invention, fait appel au modèle VBV tel que décrit dans la norme MPEG2.

Le modèle VBV, de l'Anglo-saxon Video Buffering Verifier est défini comme un décodeur hypothétique branché en sortie du codeur et permettant de modéliser les contraintes sur la variation du débit. Il repose sur l'hypothèse que le décodeur extrait instantanément de son buffer les images à décoder. Ce modèle est intégré dans l'algorithme de régulation du codeur et il est indispensable que ce dernier sache précisément la valeur de l'instant de sortie de ces images du buffer du décodeur. C'est le codeur lui même qui se charge de décider ces instants de décodage au moyen d'un procédé selon la norme MPEG2 décrit à la figure 2.

Un codeur 21 est constitué des éléments suivants :

- un module de codage 211 recevant les données numériques vidéo en son entrée, qui est celle du codeur,
- un buffer de sortie 212 recevant sur son entrée les données codées provenant du module de codage,
- un circuit d'insertion 213 dont l'entrée est reliée à la sortie du buffer 212 pour l'insertion d'une référence horloge aux données provenant du buffer et transmettant le flux de données ou bitstream ainsi constitué sur un canal de transmission 22, liaison par câble, hertzienne ou satellite,
- un circuit d'horloge interne 214 qui reçoit du module de codage 211 le signal de synchronisation correspondant à l'instant d'arrivée de l'image au codeur, transmet à ce module un "instant décodage" DTS (Decoding Time Stamp en Anglo-saxon et selon la norme MPEG2) et qui fournit également au circuit d'insertion une valeur horloge PCR (Program Clock Reference).

Les données transmises sur le canal arrivent sur l'entrée d'un décodeur 23. Ce dernier comprend :

- un circuit de démultiplexage 231 réalisant l'extraction de la référence horloge PCR et recevant sur son entrée qui est également celle du décodeur, les données transmises sur le canal,
- un buffer du décodeur 232 recevant les données provenant du circuit de démultiplexage,
- un module de décodage 233 dont l'entrée est reliée à la sortie du buffer, effectuant les opérations de décodage inverses des opérations de codage et fournissant sur sa sortie qui est également celle du décodeur 23 les données vidéo décodées,
- un circuit d'horloge interne 234 relié au circuit de démultiplexage pour recevoir cette référence PCR (Program Clock Reference) et relié également au buffer pour lire l'instant décodage DTS et transmettre un signal de lecture.

Ainsi, toutes les 100 ms environ, la valeur de l'horloge interne du codeur (PCR) est émise dans le bitstream MPEG2 au niveau de la couche transport (définie dans la norme). Le décodeur capte cette valeur PCR pour asservir sa propre référence temporelle au moyen d'une boucle à verrouillage de phase ou PLL se trouvant dans le circuit d'horloge interne 234. Ainsi, codeur et décodeur possèdent une horloge de référence commune.

A chaque image qui se présente à l'entrée du codeur, l'horloge PCR est échantillonnée et compensée d'un temps de transit. L'information obtenue, une étiquette instant de décodage (DTS = Decoding Time Stamp), est insérée dans le bitstream MPEG2 en association avec cette image et correspond à l'instant de décodage programmé.

Le décodeur se charge de réceptionner les images dans son buffer de régulation qui mémorise pour chacune d'elles l'instant DTS auquel le codeur a programmé le décodage. Ainsi, à chaque fois que l'horloge PCR reconstruite au décodeur atteint la valeur DTS de l'image positionnée en sortie de son buffer, le circuit d'horloge initialise le décodage et le contenu du bitstream correspondant à l'image est extrait du buffer du décodeur par l'intermédiaire du signal de lecture.

Si VBV_size est la taille du buffer du décodeur et VBV_fullness le niveau de remplissage de ce buffer à un instant donné, en faisant l'hypothèse que le décodeur doit extraire de son buffer la première image encodée alors que celui-ci en plein (VBV_fullness = VBV_size), il devra attendre, avant de valider sa sortie, un temps égal à :

$$T_{init} = \tau - \frac{VBV\_size}{rate}$$

où $\tau$ est le temps de transit dans les buffers (end-to-end delay)
et rate est le débit de sortie du codeur (débit de transmission).

Il s'agit en fait du temps de séjournement de l'image dans le buffer du codeur.

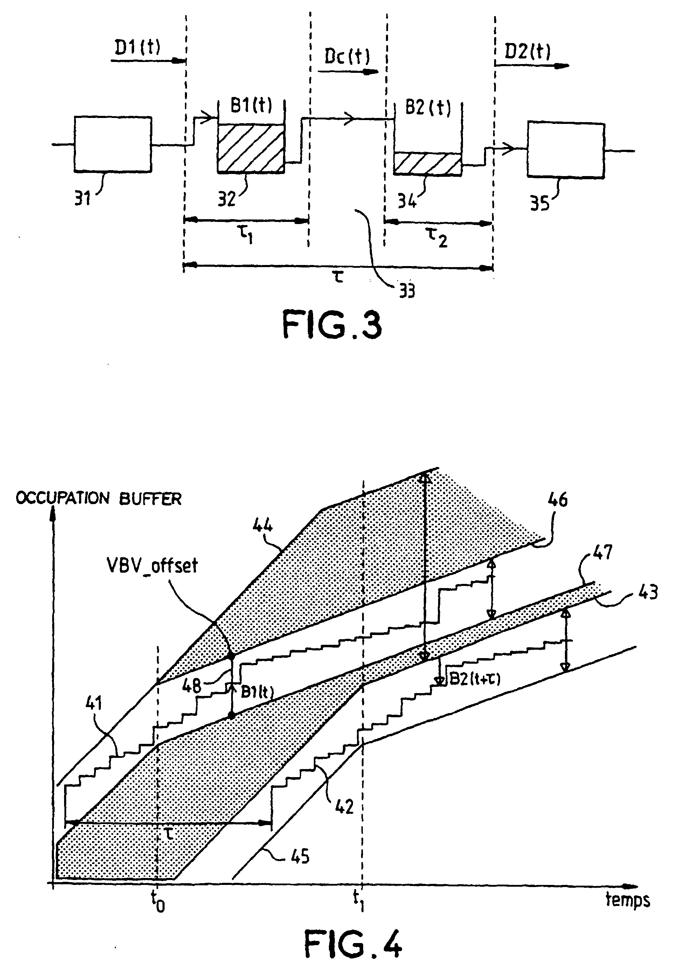

Un schéma simplifié de la chaîne complète codage-décodage est représenté à la figure 3.

Les notations suivantes sont adoptées :

D1 (t) = débit sortant du circuit de codage à l'instant t (entrée du buffer codeur),

D2(t) = débit entrant du circuit de décodage à l'instant t (sortie du buffer du décodeur),
B1 (t) = occupation buffer du codeur à l'instant t,
B2(t) = occupation buffer du décodeur à l'instant t,
Dc(t) = débit canal à l'instant t.

Un circuit de codage 31 recevant sur son entrée les données vidéo est relié à un buffer ou mémoire tampon ou tampon 32 symbolisé par un récipient rempli d'une quantité B1(t) de données qui est l'occupation buffer. Ce tampon est relié par une liaison physique, hertzienne ou satellite, liaison appelée canal de transmission 33, aux entrées de tampons 34 de décodeurs. Chaque tampon 34 a un état de remplissage B2(t). La sortie du tampon 34 est reliée à l'entrée d'un circuit de décodage 35 proprement dit.

Soit $\tau 1$ le temps de séjournement d'une image dans le tampon 32 et $\tau 2$ le temps de séjournement d'une image dans le tampon 34 et $\tau$ le temps écoulé entre l'instant d'entrée de l'image dans le tampon du codeur et l'instant de sortie de cette même image du tampon du décodeur.

Pour garantir un temps global de traitement (compression + mémorisation + transmission + mémorisation + décompression) constant, chaque image doit traverser l'étage de bufferisation ou mémorisation côté codeur et décodeur dans un temps $\tau$ constant, les temps de codage et de décodage proprement dits étant constants et les débits en entrée codeur et sortie décodeur étant identiques :

$$\tau = \tau 1 + \tau 2 = \text{cste}$$

Pour garantir ce temps $\tau$ constant et en se référant à la figure 2, l'étiquette instant de décodage DTS insérée dans le bitstream est calculée en faisant subir à la valeur d'échantillonnage de l'horloge PCR correspondant à l'arrivée d'une image en entrée du codeur un offset positif égal au temps de transit $\tau$ dans les buffers codeur et décodeur (temps de transit aussi appelé end to end delay).

$\tau$ étant le temps de transfert d'une image complète, le débit en entrée du buffer du codeur à l'instant t est égal à celui en sortie du buffer du décodeur à l'instant t + $\tau$ :

$$D1(t) = D2(t+\tau)$$

Les conditions initiales à l'instant t0 sont les suivantes :

$$B1(t0) = B2(t0) = 0$$

$$\int_{t_0}^{t_0+\tau} D_2(t)dt = 0$$

Etat buffer du décodeur à l'instant t0 + $\tau$ :

$$B_2(t_0 + \tau) = \int_{t_0}^{t_0+\tau} D_c(t)dt$$

A tout instant, l'état buffer du codeur vaut :

$$B_1(t) = \int_{t_0}^{t} (D_1(t) - D_c(t))dt$$

De même, l'état buffer du décodeur à t+$\tau$ s'écrit :

$$B_2(t + \tau) = \int_{t_0}^{t+\tau} (D_c(t) - D_2(t))dt$$

On a donc :

$$B_2(t+\tau)=\int_{t_0}^{t}D_1(t)dt-B_1(t)+\int_{t}^{t+\tau}D_c(t)dt-\left[\int_{t_0}^{t_0+\tau}D_2(t)dt+\int_{t_0+\tau}^{t+\tau}D_2(t)dt\right]$$

$$=\int_{t_0}^{t}(D_1(t)-D_2(t+\tau))dt-B_1(t)+\int_{t}^{t+\tau}D_c(t)dt-\int_{t_0}^{t_0+\tau}D_2(t)dt$$

$$=\int_{t}^{t+\tau}D_c(t)dt-B_1(t)$$

La relation ci-dessus caractérise le comportement du buffer du décodeur à partir des mesures effectuées sur le buffer du codeur.

Lorsque le débit sur le canal est constant, les états buffers sont complémentaires :

$$B_2(t+\tau)=B_2(t_0+\tau)-B_1(t),$$

avec $B_2(t_0+\tau)$=etat initial du buffer du decodeur

Ce résultat traduit le principe intuitif des vases communicants entre les buffers du codeur et du décodeur avec un délai égal au temps de traversée d'une donnée à travers ces deux buffers.

Pour un codage vidéo MPEG II Main Profile Main Level (MP@ML), la constante obtenue par l'addition des deux volumes buffer est limitée à 1.835 Mbit.

Lorsque le débit sur le canal est variable, l'état du buffer du décodeur ne peut être connu explicitement qu'à la seule condition de connaître le volume :

$$\int_{t}^{t+\tau}D_c(t)dt$$

Ce volume égal à B1(t) + B2(t + τ) caractérise l'offset d'un buffer virtuel situé dans le buffer codeur et défini ci-après.

La figure 4 représente un exemple d'occupation cumulée des buffers en fonction du temps, c'est à dire la quantité d'informations cumulées dans les buffers du codeur et du décodeur et permet de déduire l'évolution du remplissage de chacun des buffers.

L'axe des abscisses représente le temps et l'axe des ordonnées l'occupation cumulée ou quantité d'informations cumulées dans les buffers.

La courbe 41 correspond au buffer codeur et peut être assimilée à une adresse d'écriture du buffer ou pointeur d'écriture et chaque tiret vertical représente la quantité d'information mémorisée par le buffer et nécessaire pour le codage d'une image en inter ou en intra (tirets plus longs pour l'intra).

La courbe 42 correspond au buffer décodeur et au pointeur lecture du buffer du décodeur et représente la quantité d'information cumulée sortant du buffer. En vertu de la relation exprimée ci-avant, cette seconde courbe est une translation selon l'axe des abscisses de la première courbe d'une valeur de τ.

La courbe 43 représente la quantité d'informations cumulées sortant du buffer du codeur et la quantité d'informations entrant dans le buffer du décodeur. Ces courbes sont superposées et représentent la quantité d'informations transmises sur le canal, du fait que le temps de transit dans le canal est supposé égal à zéro pour faciliter le raisonnement. En fait, la courbe 43 représente le pointeur de lecture du buffer du codeur qui se superpose au pointeur d'écriture du buffer du décodeur. La pente de cette courbe est le débit canal Dc(t), le débit en sortie du buffer du codeur et en entrée du buffer du décodeur.

La courbe 44 symbolise la taille réelle du buffer codeur et la courbe 45 la taille du buffer décodeur. Il s'agit d'une translation de la courbe 43 selon l'axe des ordonnées, d'un vecteur positif de module la taille du buffer du codeur pour la première, d'un vecteur négatif de module la taille du buffer du décodeur pour la seconde. Enfin les courbes 46 et 47 servent à modéliser un buffer virtuel dans le buffer codeur en définissant sa position et sa taille.

Ce buffer virtuel représente une zone de régulation " utile " dans le buffer du codeur et constitue l'image dans le buffer du codeur du modèle VBV.

Le positionnement dans le buffer physique du codeur est calculé de façon à garantir un délai de transit constant de chaque image à tous les débits.

Il est défini par un paramètre VBV_offset qui est l'adresse maximum dans la zone de régulation à l'instant donné t. Il correspond à l'écart entre les courbes 43 et 46 lu sur l'axe des ordonnées.

La connaissance de ce paramètre VBV_offset permet à tout instant de vérifier le respect des contraintes d'occupation buffer au décodeur en s'appuyant sur le modèle VBV. Cette connaissance est indispensable au bon fonctionnement de l'algorithme de régulation.

Le positionnement du buffer virtuel dans le buffer physique du codeur s'obtient comme indiqué ci-dessous :

Nous avons la relation :

$$B_2(t + \tau) = \int_t^{t+\tau} D_c(t)dt - B_1(t)$$

Cette relation peut être exprimée en « discrètisant » au niveau image :

$$B_2(n + \tau) = \sum_{k=n+1}^{k=n+\tau} D_c(k) - B_1(n)$$

Dans cette formulation discrète :

- n représente l'image à l'instant t
- Dc(k) représente le débit à l'image (bits par image) en sortie du codeur, durant le codage de l'image k.
- $\tau$ est exprimé en nombre d'images correspondant à la durée $\tau$.

On obtient aussi pour l'image précédente :

$$B_2(n + \tau - 1) = \sum_{k=n}^{k=n+\tau-1} D_c(k) - B_1(n-1)$$

On en déduit la variation du taux d'occupation buffer :

$$\Delta B_2(n + \tau) = B_2(n + \tau) - B_2(n + \tau - 1)$$
$$= \sum_{k=n+1}^{k=n+\tau} D_c(k) - B_1(n) - \left[ \sum_{k=n}^{k=n+\tau-1} D_c(k) - B_1(n-1) \right]$$
$$= D_c(n + \tau) - D_c(n) - \Delta B_1(n)$$

En remarquant que :

$$\Delta B_1(n) = \Delta D_1(n) - D_c(n) - \varepsilon_{Dc(n)}$$

on obtient la formule de mise à jour du taux d'occupation du buffer virtuel :

$$\Delta B_2(n + \tau) = D_c(n + \tau) - \Delta D_1(n) + \varepsilon_{Dc(n)}$$

formule dans laquelle $\Delta D1(n)$ correspond au coût de codage de l'image à l'instant n et où $Dc(n+\tau)$ est le débit attendu en sortie du codeur à l'instant $n+\tau$. Le troisième terme de l'équation est l'erreur mesurée à l'instant n entre le débit attendu en sortie du codeur et la valeur effectivement mesurée Dc(n).

Le coût de codage de l'image à l'instant n dépend donc du débit attendu en sortie du codeur à l'instant $n+\tau$. En respectant ce principe fondamental, nous disposons à tout instant de l'information d'occupation du buffer du modèle VBV en appliquant le calcul :

$$VBV\_fullness(n) = VBV\_fullness(n-1) + Dc(n+\tau) - Last\_picture\_cost + \varepsilon Dc(n)$$

Conformément à la condition ci-dessus, la consigne est reçue juste avant le codage de l'image (n) et provient d'un organe externe (allocateur de débit).

Cet allocateur de débit reçoit par exemple la complexité des images précédentes sur la durée d'un GOP pour prévoir un débit canal $\tau$ instant plus tard en tenant éventuellement compte des complexités des sources vidéo devant être transmises sur le même canal.

Si l'on note Bpp(n) la consigne du débit canal attendu en sortie du codeur pour la période image (n+$\tau$), on peut définir la mise à jour du modèle VBV au niveau image par l'équation :

$$VBV\_fullness(n) = VBV\_fullness(n-1) + Bpp(n) - Last\_picture\_cost + \varepsilon Bpp(n - \tau)$$

où :

$$\varepsilon Bpp(n - \tau) = Bpp(n-\tau) - Dc(n)$$

représente l'erreur entre la consigne reçue avant le codage de l'image (n-$\tau$) et le débit effectif en sortie du codeur durant le codage de l'image n.

Cette relation nous amène à poser la condition principale de fonctionnement du codeur à débit variable :

l'information de débit reçue par l'algorithme de régulation doit précéder son application effective en sortie du codeur d'un temps constant égal au délai de transit dans les buffers codeur et décodeur.

La modélisation de l'état buffer du décodeur passe par la connaissance a priori du débit canal sur l'horizon [t, t+$\tau$] au moment du codage de l'image présentée à l'instant t au codeur.

Ainsi, en maîtrisant la position de ce buffer virtuel, le codeur est en mesure de prévenir les éventuels dépassements qui pourraient intervenir au décodeur. Au regard de la figure 4, on constate bien que la reproduction du buffer du décodeur par le buffer virtuel implique un mécanisme d'anticipation lors des changements de débit.

Pour un débit élevé, la zone utile de régulation du codeur se situe dans la partie "haute" du buffer physique symbolisé par les courbes 43 et 44, elle passe dans la partie basse du buffer lorsqu'un débit faible est atteint.

Ce passage est anticipé d'une durée $\tau$ sur le changement de débit sur le canal.

Le temps de traversée des deux buffers est constant. Il est choisi en prenant en compte le temps de traversée des buffers pour un fonctionnement au débit minimal admissible. On choisit $\tau >$ VBV_size/débit_min.

Cette valeur peut devenir pénalisante si on souhaite respecter une contrainte de retard faible pour les débits élevés (contrainte éventuelle à un cahier des charges). Néanmoins, il est possible de limiter la zone utile de régulation aux faibles débits pour réduire le temps $\tau$.

Notons enfin que la taille du buffer du codeur est supérieure à celle du buffer du décodeur dans une proportion égale au rapport du débit maximal sur le débit minimal. Pour un format d'image donné, ce rapport n'excédera pas 4 ce qui permet de prévoir une taille de buffer au codeur de 8 Mbits (pour une taille utile max de 1.835 Mbits en MP@ML).

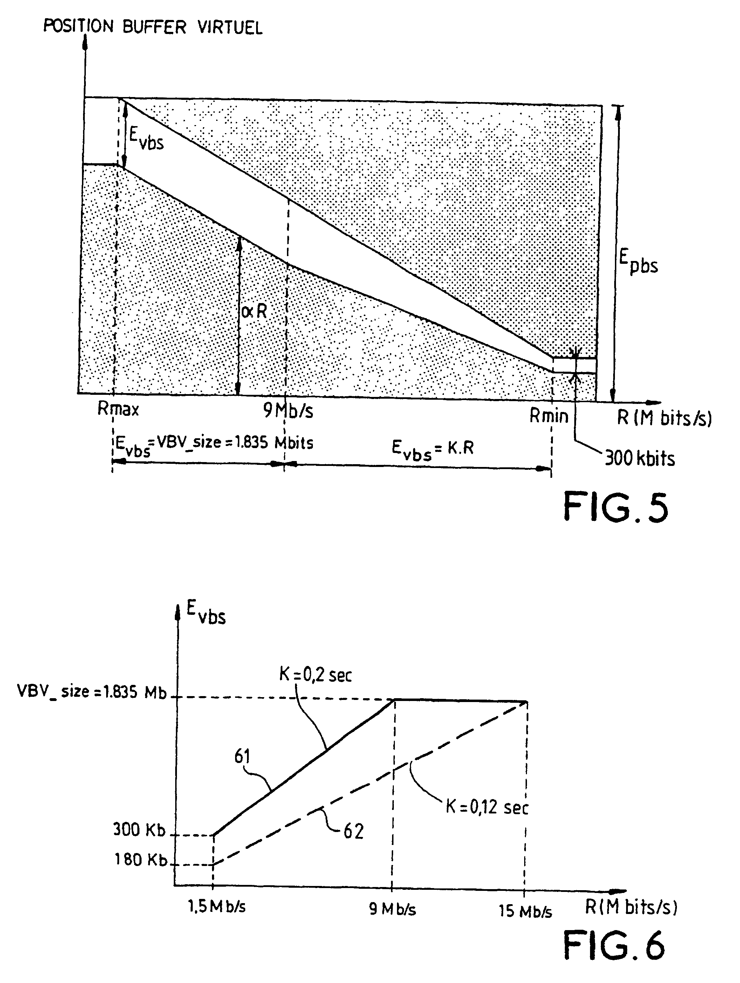

La figure 5 est une représentation du buffer virtuel dans la buffer physique de l'encodeur. Elle montre comment doit être positionné le buffer virtuel et qu'elle doit être sa taille en fonction du débit courant.

Sur l'axe des abscisses est tracé le débit en Mbits/s et dans le sens décroissant et sur l'axe des ordonnées la « position » du buffer virtuel en Mbits.

Pour un débit maximum et dans la zone de saturation, la taille du buffer virtuel est égale à la taille du buffer du décodeur, par exemple 1,835 Mbits dans notre exemple.

$$Evbs = VBV\_size.$$

$$\alpha(n) = \tau - \frac{VBV\_size}{R}$$

Le buffer virtuel se trouve dans la partie haute du buffer de l'encodeur.

Dans la zone linéaire, c'est à dire entre 9 Mbits/s dans notre exemple et le débit minimum de 1,5 Mbits/s, la taille du buffer diminue linéairement et est égale à :

Evbs = K R

$\alpha$(n) = constante

Toujours en discrétisant au niveau de l'image, on appellera Epbs(n) la taille du buffer physique de l'encodeur (physical buffer size) et Evbs(n) la taille du buffer virtuel de l'encodeur (virtual buffer size) au moment du codage de l'image n.

Le buffer virtuel est dimensionné de manière à être entièrement rempli par une image codée en intra lorsque le débit de transmission est maximum.

La taille du buffer virtuel de l'encodeur est au maximum celle du buffer du décodeur soit VBV_size ; lorsque le débit de transmission devient bas, elle peut être diminuée à une valeur K.R(n), K étant une constante de temps, de valeur comprise entre 0,1 et 0,2, dépendant de la structure du GOP et du débit de transmission et R(n) le débit de transmission pour une image n.

$$Evbs[n] = min(VBV\_size, K.R[n]) \qquad (a)$$

Par simplicité, la taille du buffer virtuel est donc définie comme une fonction linéaire du débit jusqu'à atteindre la taille du buffer du décodeur à un débit donné ; ensuite la taille du buffer est maintenue constante à ce niveau de saturation.

En reprenant notre exemple :

Epbs = 7,2 Mbits

K = 0,2 s

Rmax = 15 Mbit/s

Rmin = 1,5 Mbits/s

$\tau$ = 480 ms

Evbs varie de 1,835 Mbits à 300 kbits pour la valeur minimale.

L'offset du buffer virtuel est de 7,2 Mbits pour le débit maximum et de 420 kbits ($\alpha$(n) x Rmin) pour le débit minimal.

La figure 6 donne un exemple de l'évolution de la taille du buffer virtuel en fonction du débit et pour différentes valeurs de ce paramètre K.

L'axe des abscisses représente le débit en Mbits/s, l'axe des ordonnées la taille du buffer virtuel en Mbits. La courbe 61 correspond à une valeur de K égale à 0,2 et la courbe 62 en pointillés à une valeur de K égale 0,12. Conformément à la norme MPEG 2, la taille du buffer du décodeur est prise égale à 1,832 Mbits, la variation du débit est comprise entre 1,5 et 15 Mbits/s.

La courbe 61 est séparée en deux zones, une zone linéaire entre 1,5 et 9 Mbits/s et une zone de saturation de 9 à 15 Mbits/s.

Si $\tau$ est la durée de bufferisation globale, c'est à dire le temps écoulé entre l'instant d'écriture de l'image dans le buffer de l'encodeur et l'instant de lecture de cette même image dans le butter du décodeur, temps pouvant être assimilé au temps de traversée des buffers comme précédemment expliqué et si $\alpha$(n) est une durée calculée pour garantir la valeur de $\tau$ constante, on a la relation :

$$\tau = \frac{E_{vbs}[n]}{R[n]} + a[n] \qquad (b)$$

$\tau$.R(n) = $\alpha$(n).R(n) + Evbs représente l'offset du buffer virtuel tel que précédemment défini.

Le calcul du positionnement du buffer virtuel dans le buffer du codeur revient à calculer et mettre à jour en permanence un paramètre $\alpha$(n) de telle manière que, pour une taille de buffet virtuel donnée et répondant à la relation (a), pour un débit et un temps de transfert fixé, il réponde à la relation (b).

D'une autre manière, on peut dire que l'on adapte en permanence la taille et la position du buffer virtuel de manière à garantir un temps de transfert constant.

Une fois la valeur de K choisie, on en déduit la valeur de $\alpha$.

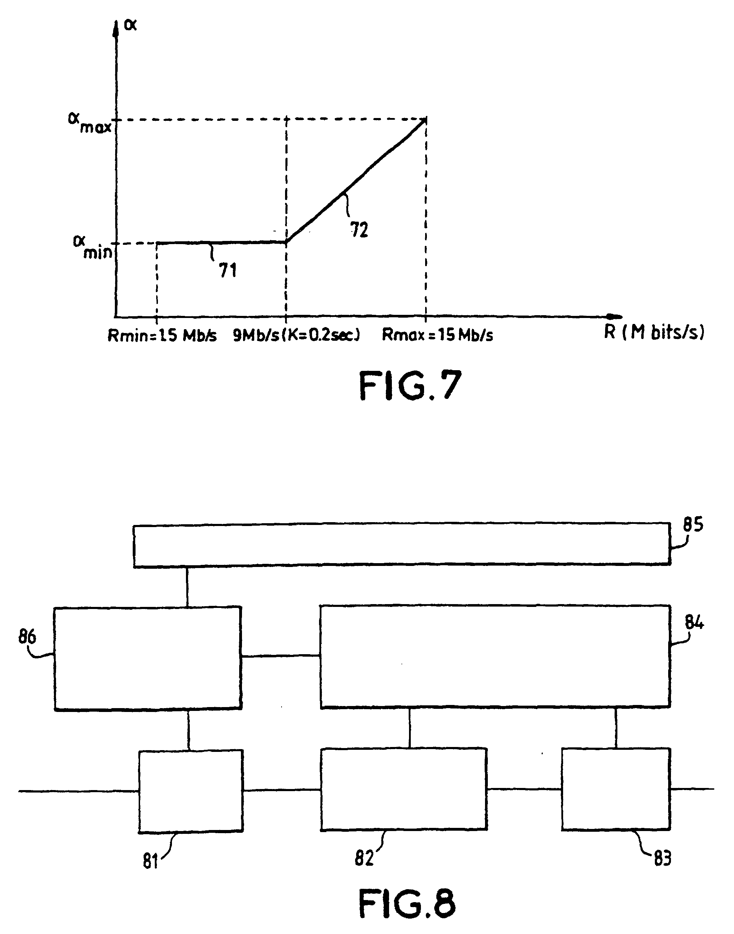

La figure 7 représente l'évolution de $\alpha$ (en ordonnée) en fonction du débit ( en abscisse).

Cette valeur de $\alpha$(n) doit être adaptée en permanence au débit de manière à garantir une valeur de $\tau$ constante.

Pour la première partie 71 de la courbe, entre 1,5 Mbits/s et 9 Mbits/s, qui correspond à la zone linéaire, la valeur de $\alpha$ est constante et égale à :

$$\alpha_{min} = \frac{E_{pbs}}{R_{max}} - K$$

Pour la deuxième partie de la courbe 72 correspondant à la zone de saturation, $\alpha$ varie de $\alpha min$ à $\alpha max$ :

$$\alpha_{max} = \frac{E_{pbs} - VBV\_size}{R_{max}}$$

La valeur minimum de K est égale à :

$$K_{min} = \frac{VBV\_size}{R_{max}}$$

La valeur choisie de K est généralement supérieure à cette valeur minimale correspondant à l'absence de zone de saturation, la valeur typique est 0,2. C'est la raison pour laquelle doit être réajustée en permanence la valeur de $\alpha(n)$, cette valeur n'étant alors pas constante.

Le codeur selon l'invention est représenté à la figure 8 et est décrit ci-après.

Un circuit de pré-traitement 81 reçoit les données à coder. Il est relié, par sa sortie, à l'entrée d'un circuit de codage 82. La sortie de ce dernier est reliée à l'entrée d'un buffer 83 ou mémoire tampon qui fournit en sa sortie le flot binaire à transmettre vers les décodeurs. La sortie du buffer est également reliée à une entrée d'un régulateur 84. Le régulateur reçoit, sur une autre entrée, des données provenant du circuit de codage, une sortie de ce circuit étant reliée à une entrée du régulateur. Un organe de supervision locale 86 est relié à un allocateur de débit 85, au circuit de pré-traitement 81 et également au régulateur 84.

Le circuit de pré-traitement 81 reçoit le signal vidéo utile contenu dans la source numérique au format 4.2.2 pour le filtrer et le mettre en forme et plus particulièrement réordonner les images reçues selon le type de codage choisi pour chacune d'entre elles. Le circuit de codage vidéo 82 compresse et formate le signal reçu en un train binaire au format MPEG2 appelé "elementary stream". Ce signal traverse le buffer de sortie 83 pour être transmis vers les décodeurs sous forme d'un flot binaire ou "bitstream". Le régulateur mesure, à partir des données codées constituant le flot binaire et transmises par le buffer, le débit effectif en sortie du codeur. Le circuit de codage 82 transmets au régulateur les données codées pour lui permettre de calculer un coût de codage et un pas de quantification qui lui est renvoyé. L'organe de supervision local 86 reçoit un coefficient de complexité du régulateur 84 qu'il va transmettre à l'allocateur de débit 85 qui reçoit également cette information des autres sources vidéo et qui alloue en conséquence un débit à chaque source vidéo en commandant le multiplexage de ces différentes sources vidéo. L'organe de supervision local 86 assure donc l'interface avec l'extérieur et reçoit notamment de l'allocateur de débit les informations de débit en avance de phase sur leur application en sortie du codeur. Il est relié également au circuit de pré-traitement 81 pour lui transmettre entre autre les structures de GOP provenant du régulateur 84 pour permettre au circuit de pré-traitement de réorganiser les images.

Le régulateur contrôle le pas de quantification du compresseur de données du circuit de codage. Ce régulateur intègre un modèle VBV du buffer du décodeur dans le buffer physique du codeur, appelé buffer virtuel, ainsi qu'un organe de mesure de débit en sortie du codeur de façon à garantir que le buffer du décodeur vidéo ne subira ni saturation ni assèchement.

Le régulateur de débit, qui agit sur le pas du quantificateur en fonction de l'état du buffer tampon peut se décomposer en deux sous-blocs fonctionnels :

Le sous-bloc de régulation image qui effectue une régulation au niveau de l'image seule reçoit pour chaque image à encoder une consigne de "target bit" qui correspond au volume de données que l'on souhaite générer pour la prochaine image à coder. Cette grandeur est déterminée par un autre sous-bloc de régulation GOP effectuant la régulation au niveau du GOP, en fonction des paramètres de configuration du codeur et de l'état du modèle VBV.

En partant du pas de quantification initial pour coder le premier bloc de l'image, l'algorithme de régulation image ajuste d'une manière dynamique le pas de quantification pour approcher au mieux le "target bit" qui lui a été programmé. Cet ajustement se fait par un système bouclé dont il est possible de contrôler la raideur (vitesse de convergence) par le paramètre du même nom.

En fin d'image, le sous-bloc de régulation image transmet le coût effectif de codage de l'image au sous-bloc de régulation GOP. Ce dernier calcule l'erreur entre ce coût et le "target bit" transmis. L'erreur est alors réinjectée dans l'algorithme de calcul des "target bits" pour l'image à suivre. Le sous-bloc de régulation image transmet également le pas de quantification moyen utilisé pour le codage de la dernière image. Celui-ci sert au calcul de la complexité a posteriori de l'image qui vient d'être codée, comme explicité plus loin.

Le principe de calcul des "target bits" par l'algorithme de régulation image est le suivant :

Soient Ti, Tp(n) et Tb(m) les coûts de codage visés (Targets) respectivement de l'image intra, de l'image n parmi les images prédictives et de l'image m parmi les images bidirectionnelles, ceci pour un GOP donné :

TI = Target bit pour l'image de type I à venir,
TP = Target bit pour l'image de type P à venir,
TB = Target bit pour l'image de type B à venir,
QI = Pas de Quantification moyen pour l'image de type I,
QP = Pas de Quantification moyen pour l'image de type P,
QB = Pas de Quantification moyen pour l'image de type B,
NP = Nombre d'images de type P dans le GOP,
NB = Nombre d'images de type B dans le GOP.

Un GOP de N images est constitué d'une image intra, de NP images prédictives et de NB images bidirectionnelles :

$$N = 1 + NB + NP.$$

Le principe de régulation en GOP impose donc de respecter la relation :

$$Ti + \sum_{n=1}^{Np} Tp(n) + \sum_{m=1}^{Nb} Tb(m) = NBpp$$

Sous hypothèse de stationnarité des coûts de codage par type d'image dans le GOP, on obtient les équations de base de la régulation inter-images :

$$(1) \qquad T_I + N_P T_P + N_B T_B = N \times B_{PP} - \varepsilon$$

$$(2) \qquad Z_I Q_I = Z_P Q_P = Z_B Q_B$$

$$(3) \qquad \begin{cases} X_I = Cout_{lastI} Q_{lastI} \approx T_{nextI} Q_I \\ X_P = Cout_{lastP} Q_{lastP} \approx T_{nextP} Q_P \\ X_B = Cout_{lastB} Q_{lastB} \approx T_{nextB} Q_B \end{cases}$$

L'équation (1) traduit le principe de répartition du débit disponible sur l'ensemble des images qui constituent le GOP. Ce débit disponible est néanmoins réduit ou augmenté d'une erreur $\varepsilon$ qui correspond à la somme des écarts (target bit - coût de codage effectif) mesurés sur l'ensemble des images du GOP précédemment codé.

$$(4) \qquad \varepsilon = \varepsilon_I + \sum_{GOP} \varepsilon_P + \sum_{GOP} \varepsilon_B$$

L'équation (2) permet d'établir une règle de correspondance des pas de quantification moyen entre images de type différent de façon à maintenir une qualité stable entre ces images de type différent. Les valeurs empiriques des constantes de proportion sont :

ZI = 1.0,
ZP = 1.35,
ZB = 1.1.

Le système d'équations (3) donne le calcul de la complexité image comme le produit du pas de quantification moyen multiplié par le coût de codage de la dernière image de même type. Une hypothèse importante de stabilité de la complexité permet ensuite d'exprimer cette même complexité sur la base des target bit utilisés pour coder les images à venir. Autrement dit, on fait l'hypothèse que les complexités images du GOP suivant sont égales aux complexités mesurées au GOP précédent.

Cette prédiction de la complexité permet d'obtenir le calcul a priori des target bit et des pas de quantification initiaux pour chaque type d'image :

$$
(5) \quad
\begin{cases}
T_I = \dfrac{Z_I X_I \times (N \times B_{pp} + \varepsilon)}{Z_I X_I + N_P Z_P X_P + N_B Z_B X_B} \\[2em]
T_P = \dfrac{Z_P X_P \times (N \times B_{pp} + \varepsilon)}{N_P Z_P X_P + N_B Z_B X_B} \\[2em]
T_B = \dfrac{Z_B X_B \times (N \times B_{pp} + \varepsilon)}{N_P Z_P X_P + N_B Z_B X_B}
\end{cases}
\qquad
\begin{cases}
Q_I = \dfrac{X_I}{T_I} \\[1.5em]
Q_P = \dfrac{X_P}{T_P} \\[1.5em]
Q_B = \dfrac{X_B}{T_B}
\end{cases}
$$

Le système d'équations (5) permet dans la plupart des cas de fournir des valeurs conformes aux contraintes de régulation du décodeur. Néanmoins, l'erreur répercutée d'un GOP sur l'autre n'est pas bornée a priori et le débit de sortie peut subir quelques variations inhérentes au mode d'implémentation choisi.

C'est pourquoi le sous-bloc de régulation GOP intègre le modèle VBV. Ce modèle simplifié de comportement du décodeur utilise les hypothèses suivantes, précédemment mentionnées :

- les temps de codage et décodage sont nuls ;
- L'introduction d'une image dans le buffer du codeur après codage est instantanée ;
- le retrait d'une image pour décodage est également instantané au décodeur.

Ainsi, à chaque image encodée, l'algorithme de régulation met à jour l'état d'occupation du buffer du modèle VBV en appliquant la relation :

$$VBV\_fullness(n) = VBV\_fullness(n) + Bpp(n) - Last\_picture\_cost + \varepsilon BPP(n-\tau)$$

Comme mentionné précédemment, cette relation exprime le fait que Bpp bits sont entrés dans le buffer du décodeur lorsque l'on a retiré l'équivalent de la dernière image codée. L'erreur supplémentaire $\varepsilon BPP$ exprime l'écart mesuré en sortie du codeur entre le débit mesuré et le débit attendu :

$$\varepsilon_{B_p}(n-\tau) = \int_{last\_picture} D_c(t)dt - Bpp(n-\tau),$$

$D_c(t)$: débit *sortie de codeur à t*

La première utilisation du modèle VBV concerne l'opération de bourrage (octets nuls ajoutés à la fin de l'image dans le bitstream) indispensable pour garantir que le buffer du décodeur ne saturera ni sur l'image courante ni durant l'émission de l'image à venir. L'opération consiste à vérifier que l'occupation buffer issue du modèle ne dépasse jamais la taille maximale du buffer du décodeur réduite de la valeur Bpp du volume de données attendu en entrée du buffer du décodeur durant la prochaine période image. Soit :

si (VBV_fullness(n) > VBV_size - Bpp(n+1)) alors

$$Last\_pict\_cost(n) = Last\_pict\_cost(n) + VBV\_fullness(n) -$$

$$(VBV\_size - Bpp(n+1)),$$

$$VBV\_fullness(n) = VBV\_size - Bpp(n+1)$$

VBV_size représente la taille utile du buffer du décodeur (1.835 Mbits pour MPEG2 en Main Profile Main Level). Un volume de données de bourrage correspondant à l'offset appliqué sur le coût de l'image est alors introduit.

Au delà du bourrage, la connaissance exacte de l'état d'occupation du buffer du modèle VBV permet un réajustement préventif des target bit des prochaines images à encoder. Cette dernière étape est indispensable pour prévenir les violations de buffer. Deux cas de figure peuvent se présenter :

- l'état observé du buffer du modèle VBV se rapproche excessivement de l'état d'assèchement. Dans ce cas, il faut réduire les valeurs des prochains target bit d'une quantité d'autant plus importante que le risque est grand ;
- l'état observé du buffer du modèle VBV se rapproche excessivement de l'état de saturation. Dans ce cas, il faut augmenter les valeurs des prochains target bit d'une quantité d'autant plus importante que le risque est grand.

L'initialisation de l'état du buffer du modèle VBV se fait en supposant le buffer du décodeur entièrement rempli. Pour assurer cet état, la notion de délai de transit des données au travers des buffers codeur et décodeur (end-to-end delay) est prise en compte, associée au principe de synchronisation entre codeur et décodeur comme précédemment décrit.

Le principe de fonctionnement de l'algorithme se caractérise donc par le calcul, par le sous-bloc de régulation GOP et à un rythme image, des paramètres " target bit " et " pas de quantification initial " à destination du sous-bloc de régulation image.

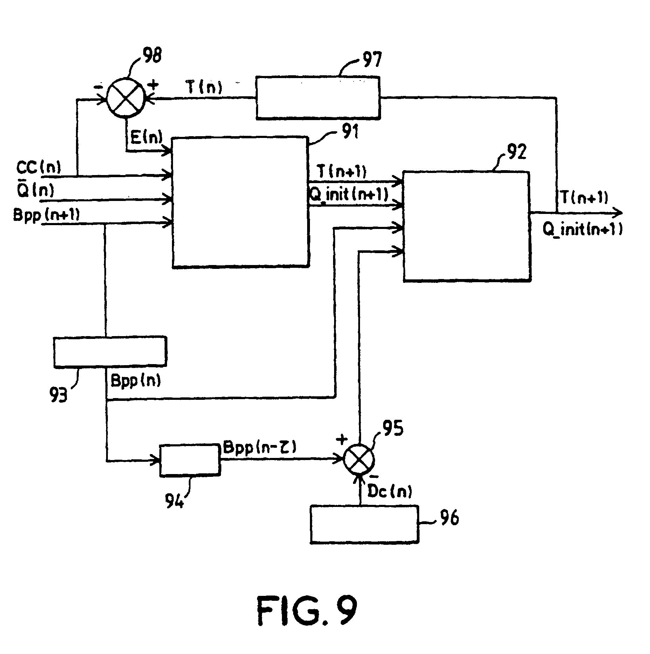

La figure 9 est une représentation schématique du sous-bloc de régulation GOP et des différents calculs effectués par l'algorithme de régulation du sous-bloc.

Un module de pré-calcul 91 reçoit les informations " coût de codage " CC(n) et " pas de quantification moyen " Q(n) issues de l'image n précédemment codée et transmises par le sous-bloc de régulation image ainsi que, sur une troisième entrée, l'erreur E(n) entre le coût attendu (Target bit T(n)) et le coût effectif CC(n). Il reçoit également sur une quatrième entrée l'information de débit attendu Bpp(n+1) correspondant à l'instant de codage de l'image suivante n+1 et qui est la consigne provenant de l'allocateur de débit. L'allocateur, comme il a été dit, transmet au régulateur une consigne de débit canal un instant τ avant que ce débit soit effectif. Il fournit donc une information de débit Bpp(n+1) pour l'image suivante. Le module 91 transmet sur une première et une deuxième entrée d'un module de contrôle 92 les informations de target bit T(n+1) pour l'image n+1 et le pas de quantification initial Q_init(n+1) de l'image n+1.

L'information de débit provenant de l'allocateur est également transmise à un circuit à retard d'une durée une image 93. La sortie de ce circuit est transmise sur la troisième entrée du module de contrôle 92. La sortie du circuit à retard 93 est également transmise à l'entrée d'un circuit à retard d'une durée τ 94. La sortie de ce circuit est reliée à une première entrée + d'un premier soustracteur 95 qui reçoit sur sa deuxième entrée l'information de débit mesurée en sortie du codeur par un circuit 96 de mesure de débit. La sortie de ce soustracteur est reliée à une quatrième entrée du module de contrôle 92. Ce module de contrôle réajuste les paramètres du buffer virtuel et transmet sur sa sortie, qui est également la sortie du sous-bloc de régulation GOP, les informations de target bit et de pas de quantification initiales pour l'image suivante n+1. Ces deux informations sont transmises au sous-bloc de régulation image pour coder la prochaine image.

Le module de contrôle a pour but de vérifier à posteriori les risques de violation buffer. Pour ce faire, il reçoit donc sur ses entrées la différence Bpp(n-τ) - Dc(n) correspondant à l'erreur entre la valeur de consigne et la valeur effective du débit ainsi que les paramètres T(n+1) et Q_init(n+1) pour la prochaine image et Bpp(n) pour l'image en cours de codage. Ces informations permettent au module de contrôle de calculer la variation du taux de remplissage du buffer virtuel.

La valeur du Target bit de l'image suivante éventuellement corrigée T(n+1) est rebouclée sur un circuit à retard d'une durée une image 97 dont la sortie attaque l'entrée + d'un deuxième soustracteur 98. L'entrée - de ce soustracteur reçoit le coût de codage de l'image courante CC(n) et sa sortie se connecte sur la troisième entrée du module de précalcul 91.

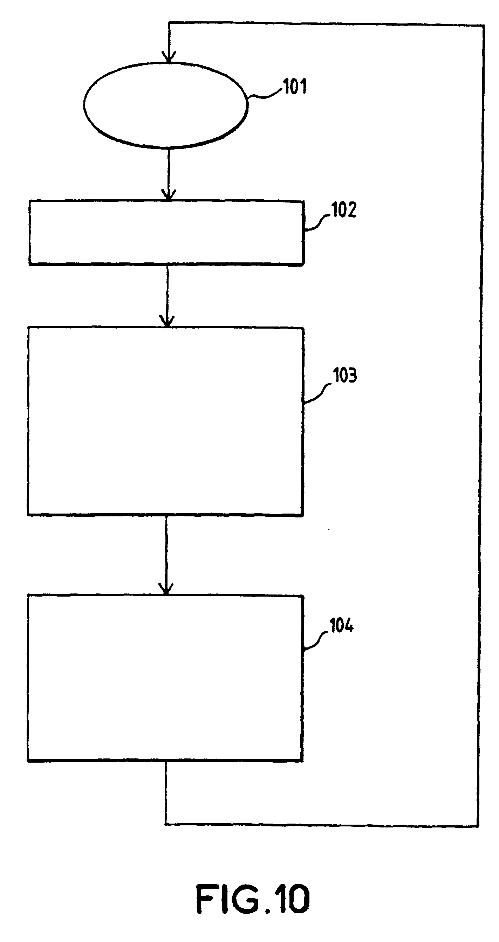

Les différents calculs effectués par le module de pré-calcul et le module de contrôle sont explicités à l'aide de l'organigramme décrit à la figure 10.

La première étape 101 est une boucle d'attente d'interruption pour le déclenchement des tàches. Une interruption image informe l'algorithme que les informations issues de la régulation image pour l'image n qui vient juste d'être encodée sont disponibles. On passe alors à l'étape suivante 102 qui lit les informations suivantes :

- coût de codage CC(n) pour l'image n,
- pas de quantification moyen $\overline{Q(n)}$ pour l'image n,
- débit de consigne Bpp(n+1) ramené à l'image pour l'image n+1,
- type de l'image n+1 (I, P, ou B),
- débit en sortie du codeur Dc(n) pour l'image n.

L'étape suivante 103 calcule les "targets bits" pour chaque type d'image. Les résultats du codage de l'image précédente (coût de codage et pas de quantification moyen) sont utilisés pour calculer la complexité de l'image n.

L'erreur par rapport au "target bit" issue du codage, E(n), est calculée pour chaque image n et cumulée sur un GOP pour être mémorisée, en fin de GOP sous la valeur $\varepsilon$. A la première image du GOP suivant, E(n) est initialisé.

$$X(n) = CC(n) \times \overline{Q(n)}$$

$$E(n) = E(n-1) + T(n) - CC(n)$$

Un nouveau "target bit" est calculé pour l'image n + 1 et cela pour chaque type d'image :

$$\begin{cases} T_I = \dfrac{Z_I X_I \times (N \times B_{pp}(n+1) + \varepsilon)}{Z_I X_I + N_P Z_P X_P + N_B Z_B X_B} \\[3em] T_P = \dfrac{Z_P X_P \times (N \times B_{pp}(n+1) + \varepsilon)}{N_P Z_P X_P + N_B Z_B X_B} \\[3em] T_B = \dfrac{Z_B X_B \times (N \times B_{pp}(n+1) + \varepsilon)}{N_P Z_P X_P + N_B Z_B X_B} \end{cases}$$

Ces "target bit" prennent donc en compte l'erreur cumulée du GOP précédent. Cette erreur est en quelque sorte redistribuée sur les images du GOP suivant pour le calcul des targets bits.

L'étape suivante 104 réalise un contrôle à posteriori des risques de violation du buffer virtuel, réajuste les "targets bits" en conséquence et calcule le pas de quantification initial de l'image suivante à coder.

Ainsi, cette étape réalise une mise à jour du modèle VBV par le calcul de l'état VBV_fullness. Cet état buffer permet dans un premier temps d'insérer du bourrage pour éviter une saturation du buffer du décodeur. Dans un second temps, le "target bit" est éventuellement réajusté (le procédure de réajustement ne fait pas l'objet de ce brevet) et le pas de quantification initial pour la prochaine image à coder est calculé.

$$Ec(n) = Bpp(n-\tau) - Dc(n)$$

$$VBV\_fullness(n) = VBV\_fullness(n-1) + Bpp(n) - [CC(n)+B(n)] - Ec(n)$$

CC(n)+B(n) représente le coût de l'image CC(n) auquel est rajouté un volume de bourrage B(n) correspondant au nombre de bits (par exemple des 0) que l'on fait entrer dans le buffer du codeur en même temps que cette image n.

Si VBV_fullness(n) > VBV_size - Bpp (n + 1) alors on modifie le volume de bourrage B(n) tel que :

$$B(n) = VBV\_fullness(n) - (VBV\_size - Bpp(n+1)$$

La variation du taux de remplissage du buffer est

$$VBV\_fullness(n) = VBV\_fullness(n) - B(n)$$

Les pas de quantification initiaux sont calculés :

QI init = XI / TI,
QPinit = XP / TP,
QBinit = XB / TB.

L'étape 104 est alors rebouclée sur l'étape initiale 101.

Il est à noter que la notion de buffer virtuel et VBV_offset est implicitement liée au fait que la mesure de débit en sortie du codeur à l'instant n est comparée à la valeur Bpp de l'instant n-$\tau$. L'offset sur le buffer virtuel est alors ajusté en réinjectant l'écart entre ces deux grandeurs dans le calcul de l'état VBV_fullness. C'est cette simple boucle de contre-réaction qui assure le contrôle de la position du buffer virtuel.

Les applications concernent la télévision numérique, la transmission d'un bouquet de programmes c'est à dire la transmission simultanée de plusieurs sources vidéo par exemple en transmission satellite où le partage d'un canal de transpondeur par des sources vidéo exploite le multiplexage statistique. Les données vidéo sont compressées et multiplexées pour être transmises par paquet sur ce canal.

Elles concernent également les enregistrements DVD utilisant un encodage multipasses. Une première passe permet de déterminer la complexité des images pour tout le film. Une deuxième passe permet, à partir d'un débit moyen imposé, d'allouer un débit à chaque image en fonction de cette complexité. La qualité des images est ainsi constante pour un même volume de données.

**Revendications**

1. Procédé de codage de données numériques d'une séquence d'images vidéo réalisant une compression image de ces données (82) et une régulation du débit (84) en sortie du codeur par l'intermédiaire d'une boucle de régulation agissant sur un pas de quantification des données à coder, une mémorisation dans un buffer tampon des données en sortie du codeur (83) pour leur transmission sur un canal selon un débit variable vers un buffer d'un décodeur, un étiquetage de ces données pour garantir un temps $\tau$ constant entre l'instant de mémorisation d'une image dans le buffer du codeur et l'instant de sortie de cette image du buffer du décodeur, la régulation de débit pour l'image à l'instant n étant effectuée en fonction d'une prévision de débit pour le canal de transmission pour l'instant n+ $\tau$, de manière que le remplissage du buffer du codeur est tel qu'il évolue au cours du temps, entre deux limites définissant un buffer virtuel, la limite haute (46) ou offset du buffer virtuel calculée pour le codage de l'image à l'instant n étant proportionnelle, au moins sur une plage de variation du débit, au débit de transmission pour le canal prévu à l'instant n+ $\tau$, **caractérisé en ce que**, la taille du buffer virtuel à l'instant n, définie par ces deux limites, est proportionnelle, au moins sur une plage de variation du débit, au débit de transmission pour le canal prévu à l'instant n+$\tau$.

2. Procédé de codage selon la revendication 1, **caractérisé en ce que** le débit de transmission prévu pour l'instant n+$\tau$ est calculé en fonction de la complexité moyenne des images précédant cette image sur la durée d'un GOP (group of pictures).

3. Procédé de codage selon la revendication 1, **caractérisé en ce que** la modélisation du buffer virtuel est réalisée en codant chaque image de manière à fournir un débit en entrée du buffer correspondant au débit alloué en sortie du buffer $\tau$ instant après.

4. Procédé de codage selon la revendication 3, **caractérisé en ce que** le modèle du buffer virtuel est mis à jour à posteriori en prenant en compte l'erreur entre le débit de sortie et l'allocation de débit attribuée $\tau$ instant avant.

5. Procédé selon la revendication 1, **caractérisé en ce que** la taille maximale du buffer virtuel est celle du buffer du décodeur.

**6.** Procédé selon la revendication 1, **caractérisé en ce que** les limites haute et basse de la plage de variation du débit en sortie du codeur correspondent à un positionnement du buffer virtuel aux frontières hautes et basses du buffer physique.

**7.** Procédé selon la revendication 1, **caractérisé en ce que** la régulation pour une image n+1 est effectuée à partir d'un target bit ou nombre de bits visés pour ce codage et d'un pas de quantification initial, le target bit étant calculé à partir de la consigne du débit canal attendu en sortie du codeur pour la période image n+τ.

**8.** Procédé de codage selon la revendication 7, **caractérisé en ce que** l'on prend en compte le type de codage d'image, intra, prédictive ou bidirectionnelle et des valeurs de constantes de proportion prédéterminées pour calculer la valeur du target bit.

**9.** Procédé de codage selon la revendication 7, **caractérisé en ce que** le codage d'une image appartenant à un GOP (group of pictures) à l'instant n est effectué en prenant en compte l'erreur entre un target bit calculé pour cette image et le coût de codage de l'image, cumulée au niveau du GOP précédent.

**10.** Procédé de transmission de données de plusieurs sources vidéo réalisant pour chaque source un codage de ces données (13) selon la revendication 1 pour les transmettre selon un débit variable sur un même canal de transmission, **caractérisé en ce qu'**il réalise, pour chaque source, une prévision de débit (12) τ instant avant le débit effectif de cette source sur le canal, en fonction du débit disponible canal et de mesures de complexité des images précédentes de l'ensemble des sources vidéo.

**Patentansprüche**

**1.** Verfahren zur Kodierung von digitalen Daten einer Videobildfolge mit einer Bildkomprimierung dieser Daten (82) und einer Regelung der Bitrate (84) am Ausgang des Koders durch eine Regelschleife, die auf einen Quantisierschritt der zu kodierenden Daten einwirkt, einer Speicherung der Daten in einem Pufferspeicher vom Ausgang des Koders (83) für ihre Übertragung über einen Kanal mit veränderbarer Bitrate zu einem Puffer eines Dekoders, einer Etikettierung dieser Daten zur Gewährleistung einer konstanten Zeit τ zwischen dem Zeitpunkt der Speicherung eines Bildes in dem Puffer des Koders und dem Zeitpunkt der Ausgabe dieses Bildes aus dem Puffer des Dekoders, wobei die Regelung der Bitrate für das Bild im Zeitpunkt n in Abhängigkeit von einer Bitraten-Voraussage für den Übertragungskanal im Zeitpunkt n+τ erfolgt, derart, dass die Füllung des Puffers des Koders diejenige ist, die sich im Laufe der Zeit ergibt, zwischen zwei einen virtuellen Puffer bildenden Grenzen, wobei die obere Grenze (46) oder der Offset des virtuellen Puffers, die für die Kodierung des Bildes im Zeitpunkt n berechnet wird, proportional ist zu wenigstens einem Bereich der Änderung der Bitrate bei der Übertragungsrate für den im Zeitpunkt n+τ vorgesehenen Kanal,
**dadurch gekennzeichnet, dass**
die Größe des virtuellen Puffers im Zeitpunkt n, definiert durch die beiden Grenzen, proportional ist zu wenigstens einem Bereich der Änderung der Bitrate bei der Übertragungsrate für den beim Zeitpunkt n+τ vorgesehenen Kanal.

**2.** Verfahren zur Kodierung nach Anspruch 1, **dadurch gekennzeichnet, dass** die für den Zeitpunkt n+τ vorgesehene Übertragungsbitrate in Abhängigkeit von der mittleren Komplexität der diesem Bild vorangehenden Bilder für die Dauer einer GOP (group of pictures = Gruppe von Bildern) erfolgt.

**3.** Verfahren zur Kodierung nach Anspruch 1, **dadurch gekennzeichnet, dass** das Modeling eines virtuellen Puffers dadurch erfolgt, dass jedes Bild derart kodiert wird, dass es eine Eingangsbitrate des Puffers liefert, die der Bitrate entspricht, die dem Ausgang des Puffers τ danach zugeordnet ist.

**4.** Verfahren zur Kodierung nach Anspruch 3, **dadurch gekennzeichnet, dass** das Modell des virtuellen Puffers nach der Aufnahme des Fehlers zwischen der Ausgangsbitrate und der Zuordnung der Bitrate τ im Zeitpunkt davor erfolgt.

**5.** Verfahren nach Anspruch 1, **dadurch gekennzeichnet, dass** die Maximalgröße des virtuellen Puffers diejenige des Puffers des Dekoders ist.

**6.** Verfahren nach Anspruch 1, **dadurch gekennzeichnet, dass** die obere und die untere Grenze des Bereichs der Änderung der Bitrate am Ausgang des Koders einer Positionierung des virtuellen Puffers bei der oberen und der unteren Begrenzung des körperlichen Puffers erfolgt.

**7.** Verfahren nach Anspruch 1, **dadurch gekennzeichnet, dass** die Regelung für ein Bild n+1 aus einem Target-Bit oder der Anzahl der für diese Kodierung vorgesehenen Bit und aus einem anfänglichen Quantisierschritt erfolgt, wobei das Target-Bit aus dem Einstellwert der erwarteten Kanalbitrate am Ausgang des Koders für die Bildperiode n+τ erfolgt.

**8.** Verfahren zur Kodierung nach Anspruch 7, **dadurch gekennzeichnet, dass** der Typ der Bildkodierung, Intra, vorausgesagt oder bidirektional, und die Werte der vorbestimmten Konstanten des Verhältnisses berücksichtigt werden, um den Wert des Target-Bit zu berechnen.

**9.** Verfahren zur Kodierung nach Anspruch 8, **dadurch gekennzeichnet, dass** die Kodierung eines Bildes, das zu einer GOP (Gruppe von Bildern) gehört, im Zeitpunkt n dadurch erfolgt, dass der Wert zwischen einem für dieses Bild berechneten Target-Bit und den Kosten der Dekodierung des Bildes berücksichtigt werden, wobei dieser Fehler bei dem Wert der vorangehenden GOP akkumuliert wird.

**10.** Verfahren zur Übertragung von Daten von mehreren Videoquellen, wobei für jede Quelle eine Kodierung dieser Daten (13) nach Anspruch 1 erfolgt, um sie bei einer veränderbaren Bitrate über einen bestimmten Übertragungskanal zu übertragen, **dadurch gekennzeichnet, dass** für jede Quelle eine Voraussage der Bitrate (12) τ im Zeitpunkt vor der tatsächlichen Bitrate dieser Quelle auf dem Kanal erfolgt, in Abhängigkeit von der auf dem Kanal verfügbaren Datenmenge und von Messungen der Komplexität der vorangehenden Bilder des Satzes von Videoquellen.

**Claims**

**1.** Process for coding digital data of a video image sequence effecting image compression of this data and regulation of the bit rate at the output of the coder by way of a regulating loop acting on a quantization interval for the data to be coded, storage in a buffer of the data output by the coder (83) for its transmission over a channel at a variable bit rate to a buffer of a decoder, a tagging of this data so as to guarantee a constant time τ between the instant of storage of an image in the buffer of the coder and the instant of output of this image from the buffer of the decoder, the bit rate regulation in respect of the image at the instant n being performed as a function of a bit rate prediction in respect of the transmission channel for the instant n + τ, so that the filling of the coder buffer moves with the time between two limits defining a virtual buffer, the upper limit(46) or virtual buffer offset calculated for the coding of the image at the instant n being proportional, at least on a range of variation of the bit rate, to the transmission bit rate for the channel predicted for the instant n + τ, **characterized in that** the size of the virtual buffer at the instant n, defined between these two limits, is proportional , at least on a range of variation of the bit rate, to the transmission bit rate for the channel predicted for the instant n + τ.

**2.** Coding process according to Claim 1, **characterized in that** the transmission bit rate predicted for the instant n + τ is calculated as a function of the mean complexity of the images preceding this image over the duration of a GOP (group of pictures).

**3.** Coding process according to Claim 1, **characterized in that** the modelling of the virtual buffer is carried out by coding each image in such a way as to supply a bit rate at the input of the buffer corresponding to the bit rate allocated at the output of the buffer τ instant after.

**4.** Coding process according to Claim 3, **characterized in that** the model of the virtual buffer is updated a posteriori by incorporating the error between the output bit rate and the bit rate allocation allotted τ instant before.

**5.** Process according to Claim 1, **characterized in that** the maximum size of the virtual buffer is that of the buffer of the decoder.

**6.** Process according to Claim 1, **characterized in that** the top and bottom limits of the range of variation of the bit rate at the output of the coder correspond to a positioning of the virtual buffer at the top and bottom boundaries of the physical buffer.

**7.** Process according to Claim 1, **characterized in that** the regulation in respect of an image n + 1 is performed on the basis of a target bit or number of targeted bits in respect of this coding and of an initial quantization interval, the target bit being calculated from the setting for the expected channel bit rate at the output of the coder in respect of image period n + τ.

8. Coding process according to Claim 7, **characterized in that** account is taken of the type of image coding, intra, predictive or bidirectional and of the values of predetermined constants of proportion in order to calculate the value of the target bit.

9. Coding process according to Claim 7, **characterized in that** the coding of an image belonging to a GOP (group of pictures) at the instant n is performed by incorporating the error between a target bit calculated for this image and the cost of coding the image, this error being accumulated at the level of the previous GOP.

10. Process for transmitting data from several video sources effecting for each source a coding of this data (13) according to Claim 1 in order to transmit it at a variable bit rate over a given transmission channel, **characterized in that** it effects, for each source, a bit rate allocation (12) τ instant before the actual bit rate of this source over the channel, depending on the channel available bit rate and on measurements of complexity of the previous

$13_1$
$13_2$
$13_3$
$13_n$
11
14
12
15

ART ANTÉRIEUR
FIG.1

21
214
23
234
22
DTS
PCR
PCR
DTS
211
212
213
231
232
233

FIG.2

FIG.3

FIG.4

POSITION BUFFER VIRTUEL

## FIG.5

## FIG.6

21

FIG.7

FIG.8

FIG.9

FIG.10